# EUROPÄISCHE PATENTSCHRIFT

(11) **EP 1 269 851 B1**
(45) Veröffentlichungstag und Bekanntmachung des Hinweises auf die Patenterteilung: **03.11.2004**
(21) Anmeldenummer: 02013777.4
(22) Anmeldetag: 21.06.2002
(51) Int. Cl.: A22C 11/12, B65B 51/04

(54) **Vorrichtung zum Portionieren eines gefüllten Schlauches**
Apparatus for portioning a filled tube
Dispositif de mise en portions d'une enveloppe remplie en forme de tube

(30) Priorität: 30.06.2001 DE 10131807
(43) Veröffentlichungstag der Anmeldung: 02.01.2003
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Eisenführ, Günther, Dipl.-Ing.

(56) Entgegenhaltungen:
- DE-A- 2 429 309
- DE-A- 19 519 591

## Beschreibung

Die Erfindung betrifft eine Vorrichtung zum Abteilen von Portionspackungen eines unterteilbaren Füllgutes in einer flexiblen Schlauchhülle durch Einschnüren des gefüllten Schlauches und Aufbringen mindestens eines Verschlusselements auf den durch axiales Verdrängen des Füllgutes gebildeten Schlauchzopf, mit zwei Paaren überlappend und symmetrisch zur Schlauchachse gegenläufig bewegbaren Verdrängerblechen, die einander zugewandte, im wesentlichen dreiecksförmige Ausschnitte haben, und einer aus zwei zusammenwirkenden, zwischen den Verdrängerblechpaaren gegenläufig bewegbaren Elementen bestehenden Verschließeinrichtung, wobei die einen Verdrängerbleche jedes Paares sowie das eine Element der Verschließeinrichtung von einer ersten Kurbel und die anderen Verdrängerbleche jedes Paares sowie das andere Element der Verschließeinrichtung von einer zweiten Kurbel bewegt werden,
wobei die Radien der Kurbeln gleich sind und ihre Drehachsen gleichen Abstand von der Schlauchachse haben, mit der sie parallel in einer gemeinsamen Ebene liegen,
und wobei die Kurbeln um ihre Drehachsen synchron aus schlauchachsfernen Öffnungsstellungen in schlauchachsnahe Schließstellungen der Verdrängerbleche und der Elemente der Verschließeinrichtung und weiter wieder in die schlauchachsfernen Öffnungsstellungen drehbar sind (Arbeitszyklus).

Eine solche Vorrichtung ist aus der DE 24 29 309 A1 bekannt. Sie dient vornehmlich der Herstellung von Würsten mit einem aus Wurstbrät bestehenden Füllgut, jedoch kommt auch jedes andere pastöse Füllgut organischer und anorganischer Art in Frage. Im allgemeinen ist sie einer Füllvorrichtung nachgeschaltet, mit deren Hilfe das Füllgut durch ein Füllrohr in den von dessen Außenseite abgezogenen Verpackungsschlauch gedrückt wird. Bei einer intermittierend arbeitenden Füllvorrichtung wird die Abteilund Verschließvorrichtung beim Abschluss eines Füllvorganges tätig, beim kontinuierlichen Füllen greift sie in den gefüllten Verpackungsschlauch-Strang ein. In beiden Fällen bilden die Verdrängerbleche den Schlauchzopf, der das Ende einer Portion und den Beginn der nächsten markiert; zwei in gewissem Abstand auf denselben Schlauchzopf gesetzte Verschlusselemente machen den Abschluss dauerhaft. Zwischen den beiden Verschlusselementen kann der Schlauchzopf aufgetrennt werden: Die Wurst etc. wird vereinzelt.

Der Antrieb der vorstehend angesprochenen Abteil- und Verschließvorrichtung erfolgt mittels Kurbeln, die mit Nockenrollen in Nockenschlitze greifen, welche quer zur Vorschubrichtung in den das Abteilen bewirkenden Verdrängerblechen verlaufen. Die Elemente der Verschließeinrichtung werden in gleicher Weise betätigt.

Auch aus der DE 36 10 010 C2 ist eine Portionierungsvorrichtung bekannt, bei der die gegenläufige Längsbewegung der Verdrängerbleche quer zur Schlauchachse von Führungsstangen geführt und von einer sich um die Schlauchachse drehenden Nockenscheibe gesteuert wird.

Die Portionierungsleistung solcher Vorrichtungen zum Abteilen und Verschließen von Einzelpackungen aus einem mit entsprechendem Füllgut gefüllten Schlauchstrang ist begrenzt. Das liegt hauptsächlich an der komplexen Steuerung der zusammenwirkenden, nacheinander wirksam werdenden Vorrichtungselemente als auch der Trägheit der dabei zu beschleunigenden und abzubremsenden Massen. Hinzu kommen Probleme bei der Führungsgenauigkeit der Nockenantriebe sowie deren Verschleiß.

Dem will die Erfindung abhelfen. Sie besteht bei einer Vorrichtung des eingangs beschriebenen Aufbaus darin, dass die Verdrängerbleche und die Elemente der Verschließeinrichtung jeweils mittels Drehgelenken an den gleichsinnig angetriebenen Kurbeln angelenkt sowie mittels eines gemeinsamen Führungselements geführt sind, das um die (virtuelle) Schlauchachse auf einem auch die Kurbeln lagernden Träger schwenkbar gelagert ist.

Auf diese Weise wird der hin- und hergehenden linearen Bewegung der Verdrängerbleche und der Elemente der Verschließeinrichtung eine hinund hergehende Schwenkbewegung der gesamten Vorrichtung überlagert, die somit während jedes Arbeitszyklus' eine Doppelbewegung ausführt. Durch diese Kinematik werden die hin- und hergehenden Massen wesentlich reduziert und ferner in einem harmonischen, sinuidalen Ablauf beschleunigt und verzögert. Wegen der Symmetrie der Anordnung und des Antriebs zur Schlauchachse (eine die Kurbelachsen verbindende Linie geht immer durch die Schlauchachse) kommt es im Betrieb zu einem weitgehenden Massen- und Kräfteausgleich, was trotz hoher Drehzahl einen sehr ruhigen Lauf der Vorrichtung zur Folge hat.

Die Erfindung macht sich die Erkenntnis zu Nutze, dass es infolge der Zentralsymmetrie der befüllten Schlauchhülle und des Schlauchzopfes unwichtig ist, in welcher radialen Richtung die Vedrängerbleche zur Bildung des Schlauchzopfes und die Elemente der Verschließeinrichtung zum Setzen des Verschlusselements am Schlauch bzw. Schlauchzopf angreifen. Infolge der gleichsinnig synchronen Drehung der Kurbeln, welche die Längsbewegungen der Verdrängerbleche und der Elemente der Verschließeinrichtung zur Schlauchachse hin antreiben, werden diese gleichsinnig - um die quasi virtuelle Schlauchachse - ausgeschwenkt, und zwar während der Drehung aus der Öffnungsstellung in die Schließstellung zur einen, bei der Rückkehr aus der Schließstellung in die Öffnungsstellung nach der anderen Seite.

Beim Betrieb der Vorrichtung überlagern sich die Vorgänge der Schlauchzopf-Bildung durch lokales Einschnüren der Schlauchhülle und Verdrängen des dort befindlichen Füllgutes sowie des Verschließens durch Heranführen der beiden Elemente der Verschließeinrichtung an den Schlauchzopf. Dadurch wird die für das Portionieren (Abteilen und Verschließen) benötigte Zeit gegenüber dem Stand der Technik erheblich verkürzt.

Als Verschlusselement kommen alle Arten in Frage, einschließlich des Zopf-Verschweißens. In erster Linie aber ist ein Clip-Verschluss vorgesehen. Deshalb sind vorzugsweise die Elemente der Verschließeinrichtung ein Stempel und eine Matrize zum Verschließen eines Clips, wobei ein Clip-Einlaufkanal mit Abstand vom Kurbelzapfen derart an einer Führungsbahn des Clips mündet, dass seine Austrittsöffnung in der Öffnungsstellung mit der Führungsbahn fluchtet und ein Clip in diese eintreten kann. Mit Beginn des anschließenden Arbeitszyklus' wird die fluchtende Relativstellung der Austrittsöffnung in Bezug auf die Führungsbahn unterbrochen, weil letztere - wie vorstehend beschrieben - seitlich ausschwenkt. Dabei wird die Austrittsöffnung verschlossen, beispielsweise durch ein die Führungsbahn seitlich begrenzendes Bauteil. Eine Anordnung, bei der sich der Stempel bzw. dessen Führungsbahn einer Verschließeinrichtung der hier angesprochenen Art den jeweils nächsten Clip aus einem Magazin "abholt", dessen Auslass nur temporär Zugang zur Stempel-Führungsbahn hat, ist aus der DE 199 53 694 A1 bekannt, jedoch im Rahmen eines anderen kinematischen Aufbaus.

Eine Weiterbildung der Erfindung verdoppelt die Einschnür- und Verschließeinrichtung dahingehend, dass zwei Doppelpaare von Verdrängerblechen und zwei Verschließeinrichtungen nebeneinander und symmetrisch zu der die Drehachsen der Kurbeln durchsetzenden Mittelebene angeordnet sind, mit denen gleichlaufend zwei Verschlusselemente mit Abstand voneinander auf den Schlauchkopf gesetzt werden können. Auf diese Weise ist es möglich, die Schlauchzopf-Verbindung aufeinanderfolgender Portionen zu durchtrennen, ohne deren Verschluss aufzuheben. Daher ist diese Weiterbildung vorzugsweise um ein in der Mittelebene geführtes Messer ergänzt, welches wahlweise in den Arbeitszyklus einschaltbar ist, derart, dass es unmittelbar nach Abschluss des Verschließvorganges den Schlauchzopf zwischen den beiden Verschlusselementen durchtrennt.

Dabei kann die Anordnung so getroffen sein, dass die Schneide des Messers an einem Ende eines flachen, stumpfwinklig abgeknickten und im Knickbereich auf dem zugeordneten Kurbelzapfen schwenkbar gelagerten Doppelhebels ausgebildet ist, während das andere Hebelende über eine längenveränderliche Stelleinrichtung ortsfest am Träger verankert ist. Dadurch wird das Messer bei jedem Arbeitszyklus mitgenommen und durch die Einstellung der Stelleinrichtung wird bestimmt, ob es in der nächsten Schließstellung schneidet oder nicht. Im letzteren Fall gleitet die Messerschneide dicht über den Schlauchzopf hinweg, während sie ihn in der Schneidstellung mittels eines ziehenden Schnittes durchtrennt.

Weitere vorteilhafte Ausgestaltungen und Weiterbildungen der Erfindung sind ebenfalls Gegenstand von Unteransprüchen.

Im Folgenden wird die Erfindung an einem Ausführungsbeispiel einer Doppelclipmaschine an Hand der Zeichnungen veranschaulicht. Darin zeigt:
- Fig. 1A: die Vorderansicht des bevorzugten Ausführungsbeispiels der erfindungsgemäßen Portionierungsvorrichtung im Gesamtüberblick;
- Fig. 1B: die Vorderansicht einer der Portionierungsvorrichtung aus Fig.1A zugeordneten Clip-Zuführung (in etwas kleinerem Maßstab);
- Fig. 2A: eine Seitenansicht des Ausführungsbeispiels der Portionierungsvorrichtung im Gesamtüberblick;
- Fig. 2B: eine Seitenansicht der zugeordneten Clip-Zuführung (in etwas kleinerem Maßstab);
- Fig. 3: die Vorderansicht eines isoliert dargestellten Trägers der Portionierungsvorrichtung;
- Fig. 4: die Antriebsverbindung der beiden Kurbeln;
- Fig. 5: ein Verdrängerblechpaar nebst Verstelleinrichtung in Vorderansicht;
- Fig. 6: die aus der Darstellung in Fig. 5 herausgelösten Elemente der Verschließeinrichtung (Stempel und Matrize) in Vorderansicht;
- Fig. 7: ein Messer derselben Portionierungsvorrichtung, ebenfalls in der Ansicht wie Fig. 5;
- Fig. 8A: die Portionierungsvorrichtung in ihrer voll geöffneten Arbeitsstellung (Ausgangsstellung); ;
- Fig. 8B: die Portionierungsvorrichtung aus Fig. 8A in einer zweiten, halb geschlossenen Arbeitsstellung;
- Fig. 8C: die Portionierungsvorrichtung in einer dritten, vollständig geschlossenen Arbeitsstellung;
- Fig. 8D: die Portionierungsvorrichtung in einer vierten, halb geöffneten Arbeitsstellung.

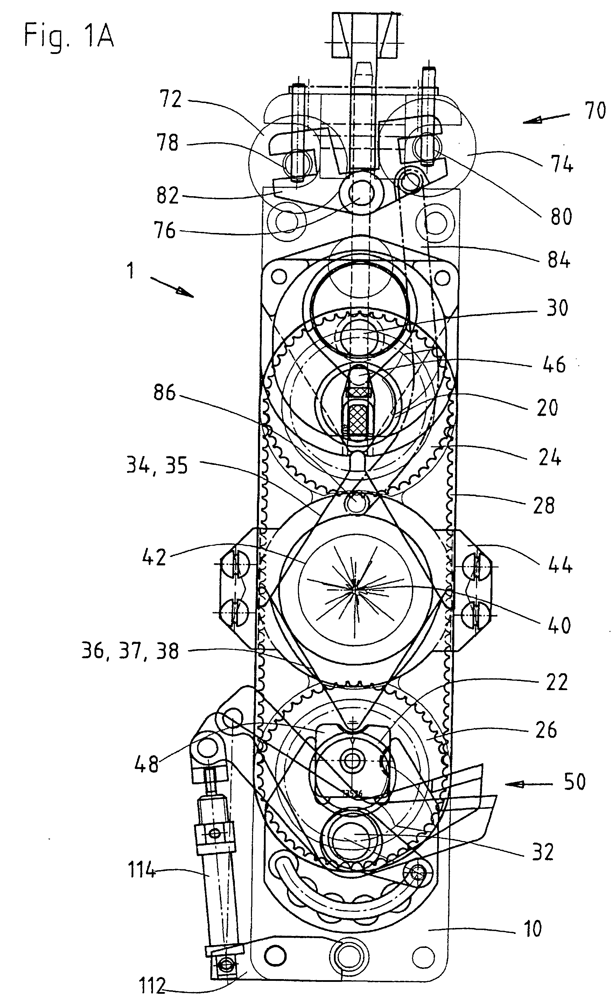

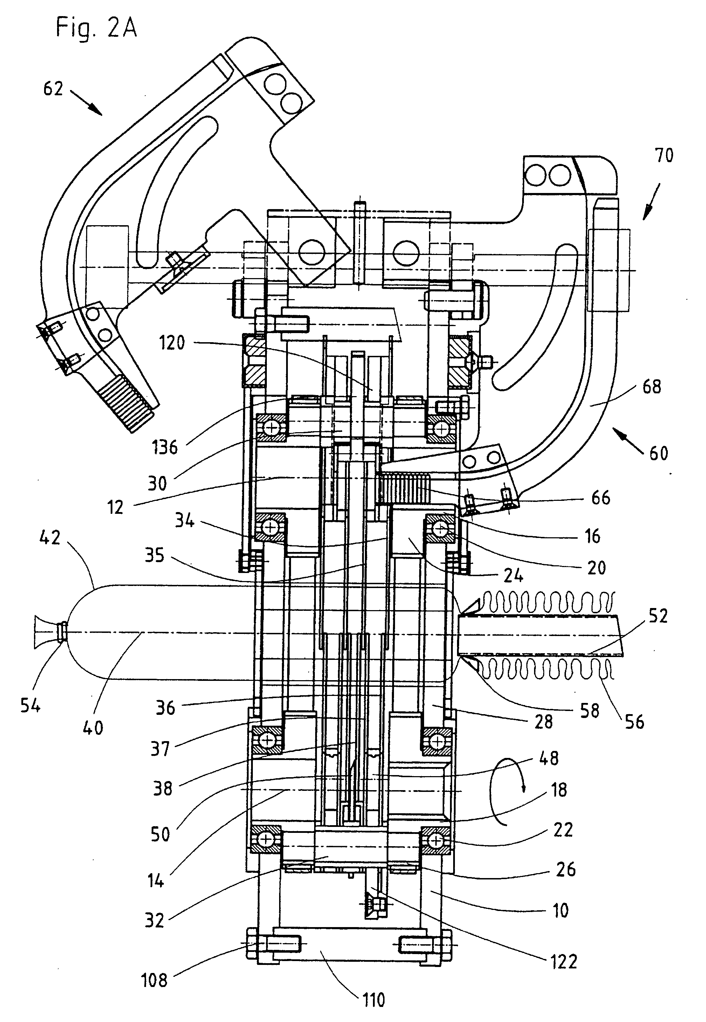

Das in den Fig. 1A und 2A gezeigte Ausführungsbeispiel weist im wesentlichen eine Spiegelsymmetrie zu einer die Darstellungsebene der Fig. 2A senkrecht durchsetzenden Mittelebene auf, so dass im Folgenden - soweit dies sinnvoll möglich ist - aus Gründen der Übersichtlichkeit nur auf die Bauteile einer Symmetriehälfte (und damit einer einfachen Clipmaschine) Bezug genommen wird.

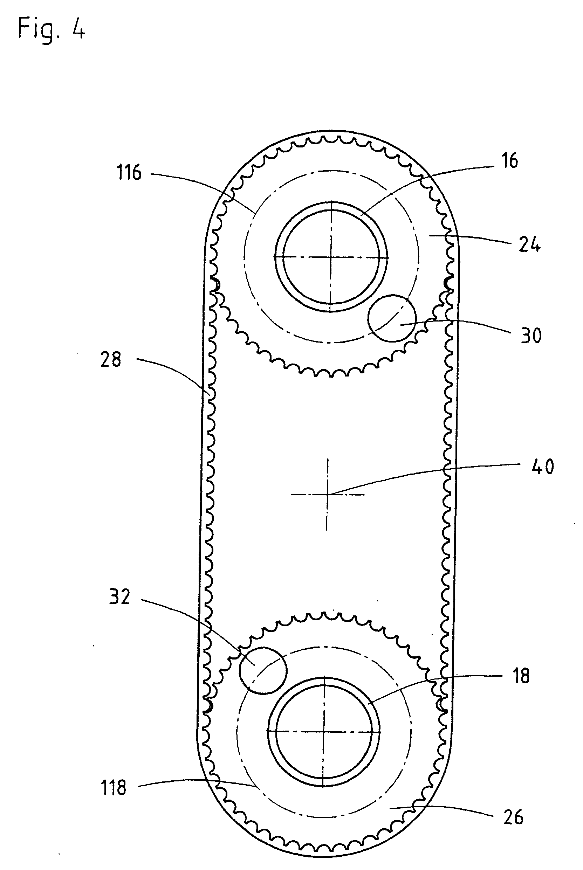

Die Portionierungsvorrichtung 1 weist einen fest stehenden, z.B. auf einem nicht dargestellten Ständer montierbaren Träger 10 auf. In dem Träger ist jeweils um eine obere und eine untere Drehachse 12, 14 eine obere bzw. untere Hohlwelle 16, 18 drehbar gelagert. Die Hohlwellen 16, 18 sind zu diesem Zweck an ihrem einen axialen Ende in Kugellagern 20, 22 einseitig gelagert. Sie tragen an ihrem anderen axialen Ende jeweils eine Riemenscheibe 24, 26. Die beiden Riemenscheiben 24, 26 sind mittels eines Zahnriemens 28 formschlüssig verbunden und können somit von einem gemeinsamen Antrieb (nicht dargestellt) in eine synchrone Rotationsbewegung versetzt werden (Fig. 4).

Die Riemenscheiben 24, 26 sind jeweils mit einem spiegelsymmetrisch zur Mittelebene angeordneten Gegenstück durch einen exzentrisch angeordneten Kurbelzapfen 30, 32 verbunden. An den Kurbelzapfen 30, 32 sind jeweils mehrere, axial beabstandete, parallel angeordnete obere Verdrängerbleche 34, 35 bzw. untere Verdrängerbleche 36, 37, 38 angelenkt. Alle Verdrängerbleche weisen an ihrem freien Ende einen im wesentlichen dreiecks- oder V-förmigen Ausschnitt auf. Die oberen Verdrängerbleche sind dabei mit ihrem nach unten weisenden Ausschnitt dem nach oben weisenden Ausschnitt der unteren Verdrängerbleche zugewandt. In der in Fig. 1A dargestellten offenen Stellung der Verdrängerbleche bilden die Ausschnitte somit eine um eine (virtuelle) Schlauch- oder Zentralachse 40 symmetrisch angeordnete, rautenförmige Öffnung. Die Öffnung ist groß genug, um die befüllte Schlauchhülle 42 beispielsweise einer Wurst passieren zu lassen.

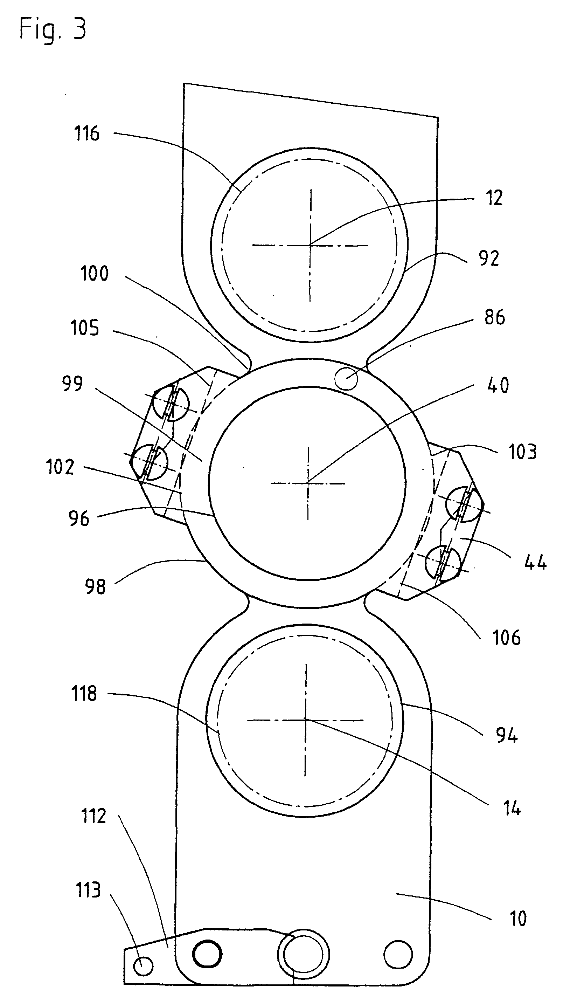

Die Verdrängerbleche werden jeweils an ihren parallelen, geraden Außenkanten in einem um die Schlauchachse 40 schwenkbar an dem Träger 10 gelagerten Führungselement 44 in Längsrichtung geführt (Fig. 3). Die oberen und unteren Verdrängerbleche führen dadurch im Bereich der Schlauchachse eine im Wesentlichen lineare gegenläufige Relativbewegung aus. Sie wirken dabei jeweils paarweise überlappend dergestalt zusammen, dass sie - im Idealfall berührungsfrei - den Querschnitt der Schlauchhülle einengen und somit das Füllgut aus dem entsprechenden Abschnitt der Schlauchhülle axial verdrängen.

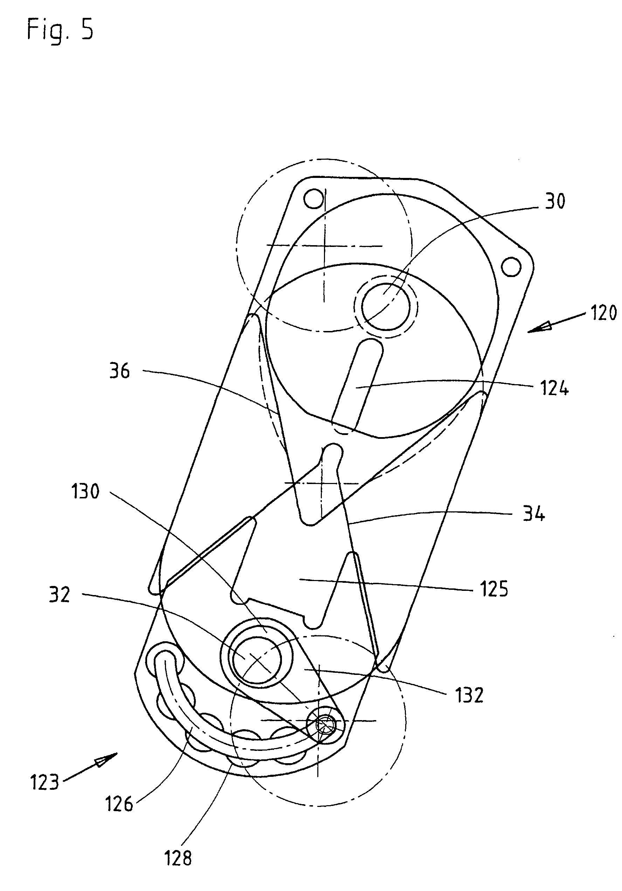

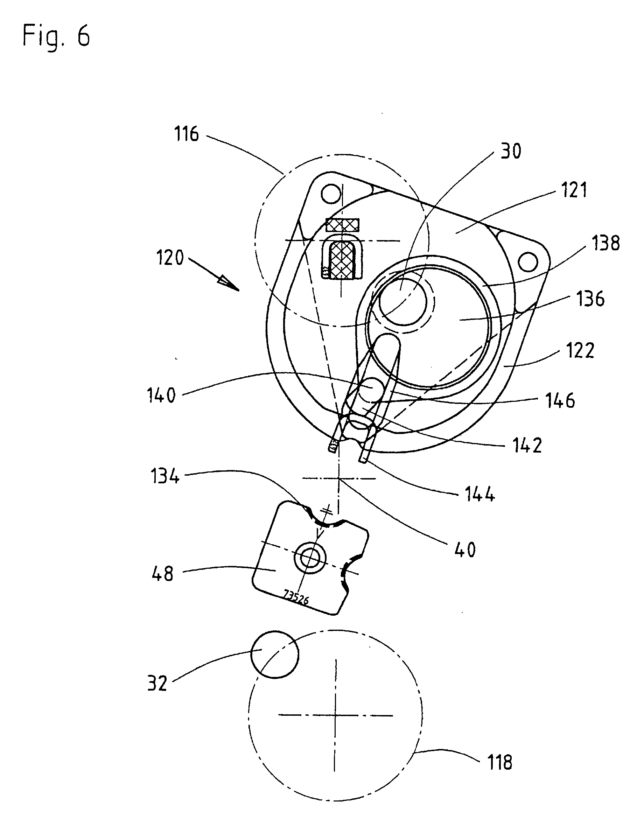

In den axialen Zwischenräumen zwischen den auf jeweils einem Kurbelzapfen 30, 32 angeordneten Verdrängerblechen 34, 35 bzw. 36, 37 befinden sich ebenfalls auf den Kurbelzapfen drehbar angelenkte und mit den Verdrängerblechen verbundene Distanzscheiben 120, 123 sowie Elemente der Verschließeinrichtung. Letztere sind vorliegend ein Stempel 46 auf dem oberen Kurbelzapfen 30 und eine Matrize 48 auf dem unteren Kurbelzapfen 32. Die Bewegung des Stempels 46 und der Matrize 48 ist somit mit der Bewegung der oberen bzw. unteren Verdrängerbleche gekoppelt (Fig. 5 und 6).

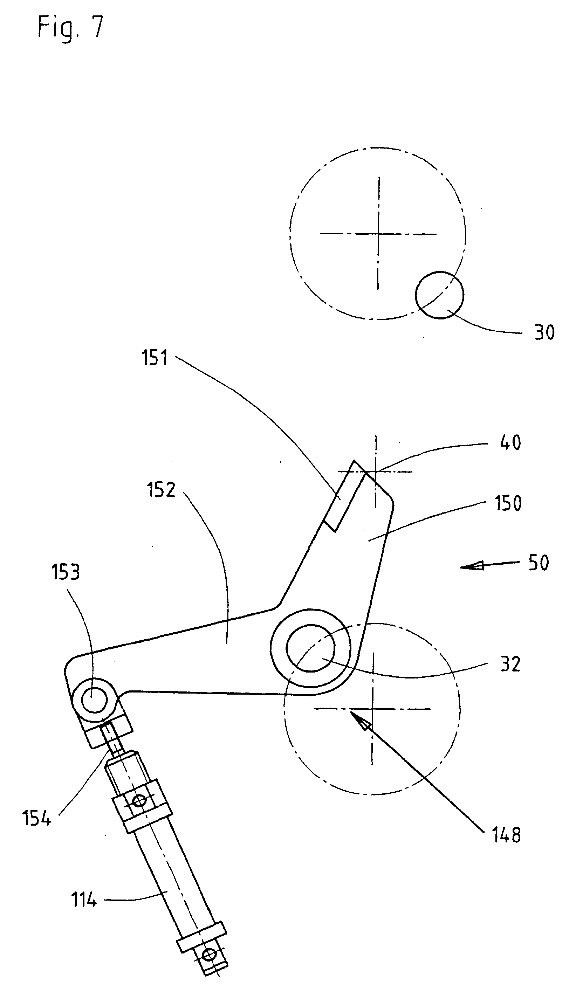

Auf der der Mittelebene zugewandten Seite des inneren Verdrängerblechpaares 35, 37 ist auf dem unteren Kurbelzapfen 32 ein zusätzliches Verdrängerblech 38 gelagert. Dadurch wird der Zwischenraum um die Mittelebene so weit eingeengt, dass ein zentrisch in der Mittelebene angeordnetes Messer 50 zwischen diesem Verdrängerblech 38 und seinem spiegelsymmetrisch angeordneten Gegenstück seitlich geführt ist. Die Lage der Schlauchhülle 42 bzw. der gebildete Schlauchzopf wird hierdurch beim Schließen der Verdrängerbleche so genau definiert, dass letzterer durch das Messer 50 sicher durchtrennt werden kann (Fig. 7).

Gemäß Fig. 2A ist die Portionierungsvorrichtung mit ihrer Schlauchachse 40 koaxial zur Mündung eines unmittelbar angrenzenden Füllrohres 52 angeordnet. Beim Befüllen des einseitig mittels eines Verschlusselements 54 verschlossenen Schlauches 42 wird ein auf dem Füllrohr 52 außenumfänglich aufgeschobener Schlauchvorrat 56 durch das mit Druck eingebrachte Füllgut abgezogen. Dabei verhindert eine Darmbremse 58 in bekannter Weise das unkontrollierte Herunterrutschen des Schlauchvorrats 56 von dem Füllrohr 52.

In die obere Hohlwelle 16 ragt - ebenfalls beidseits symmetrisch zur Mittelebene - ein Clip-Einlaufkanal 60, 62, von denen der eine - hier beispielsweise zum Zweck der Reinigung oder Wartung der Portionierungsvorrichtung - in einer seitlich abgeschwenkten Stellung dargestellt ist, vgl. Fig. 2A. Ist der Clip-Einlaufkanal 60, wie in der rechten Symmetriehälfte des Ausführungsbeispiels dargestellt, in einer betriebsbereiten Stellung, so mündet dieser an einer Clip-Führungsbahn 146, wie unten unter Bezug auf Fig. 6 ausführlich beschrieben wird. An einem Strang aufgereihte untereinander lösbar verbundene Clips 66 sind auf einer Magazinstange 68 des Clip-Einlaufkanals 60 aufgefädelt. Die Magazinstange 68 verläuft in einem 90°-Bogen von oben in die Horizontale, wodurch die Clips 66 durch ihr Eigengewicht und die Schwerkraft automatisch in Richtung der Clip-Führungsbahn 146 nachgeführt werden.

Zusätzlich zur Schwerkraft ist bei der gezeigten Ausführungsform noch ein mechanischer Clip-Vorschub 70 vorgesehen. Der Clip-Vorschub 70 besteht aus einem beidseits der Magazinstange 68 angeordneten Paar Vorschubrollen 72, 74, die auf jeweils einer um eine zentrisch angeordnete Schwenkachse 76 schwenkbar aufgehängten Achse 78, 80 gelagert sind. Der Antrieb der Vorschubrollen erfolgt intermittierend durch eine Schaukelbewegung der Achsaufhängung 82, wobei die Rollen einen Freilauf aufweisen, der für beide Rollen nur eine entgegengesetzt orientierte Drehrichtung, nämlich im Bereich zwischen den Rollen abwärts, erlaubt. Hierdurch kann die eine Rolle bei der schwenkenden Aufwärtsbewegung entlang des Clip-Stranges abrollen, während die zweite Rolle gleichzeitig bei ihrer schwenkenden Abwärtsbewegung an einer Drehung gehindert wird und den Clip-Strang durch eine reibschlüssige Mitnahme nach unten befördert. Die paarweise an jedem Clip-Strang 66 angreifenden Rollen 72, 74 sind mittels einer die beiden Achsen 78, 80 verbindenden Zugfeder an den Clip-Strang 66 angedrückt. So wird der Clip-Strang praktisch nicht an die Magazinstange 68 angedrückt und die Reibung minimiert. Der Antrieb für die Schaukelbewegung der Achsaufhängung 82 wird mittels eines an einem Zapfen 86 angelenkten Hebelarms 84 von dem im Betrieb schwenkenden Führungselement 44 abgenommen (Fig. 3).

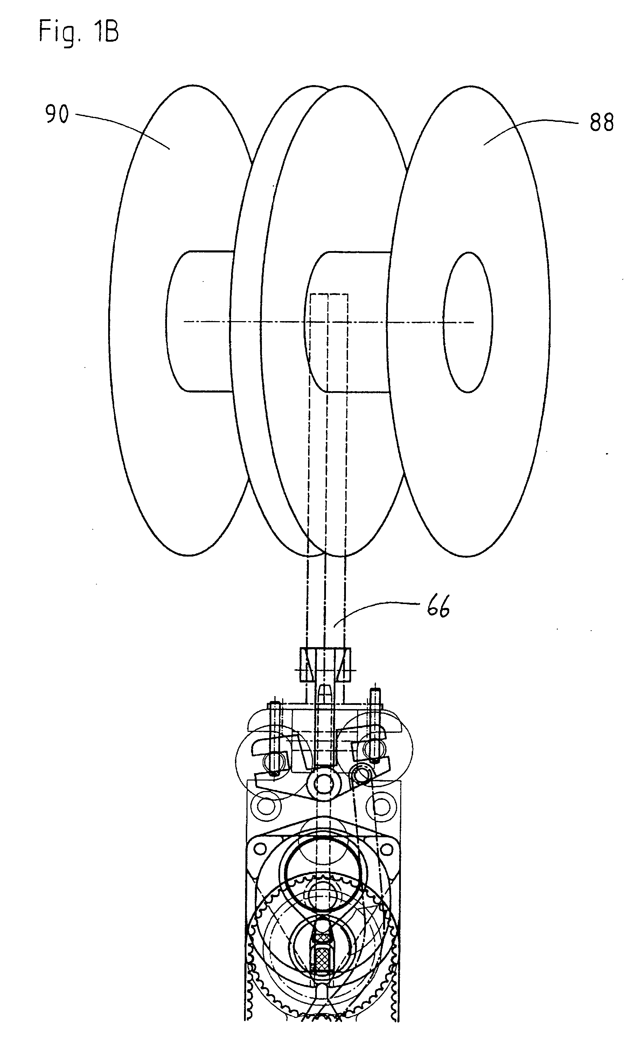

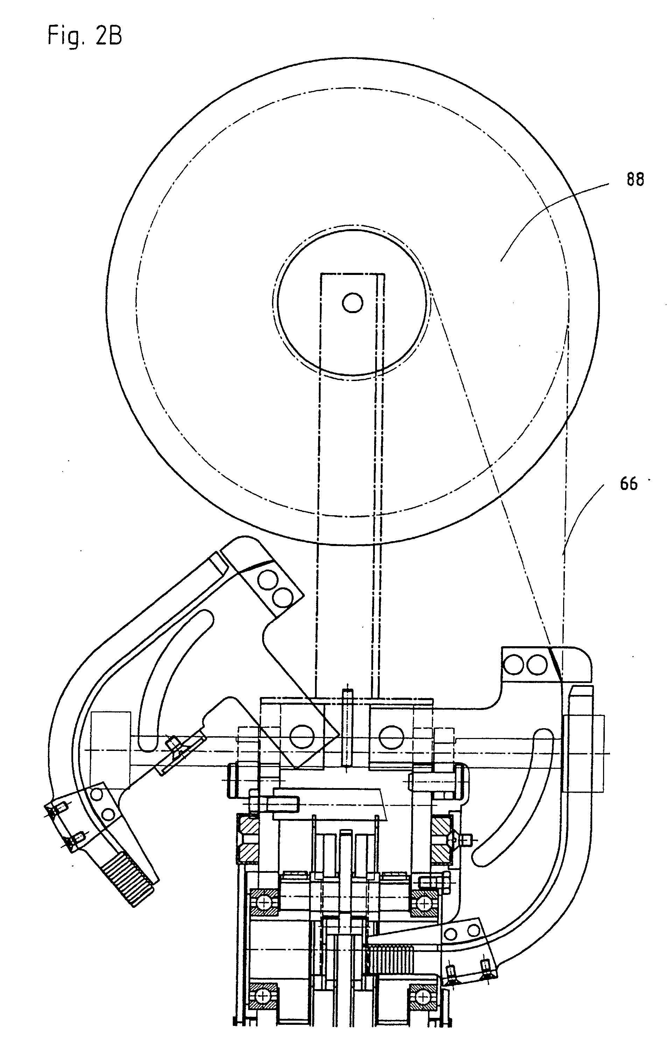

Der Clip-Strang 66 wird von einem Spulenvorrat 88 abgezogen, vgl. Fig. 1B, 2B. Das koaxial aufgehängte Spulenpaar 88 ist so angeordnet, dass die Mitte jeder Spule 88 in axialer Richtung im Wesentlichen über dem oberen Ende der zugeordneten Magazinstange 68 positioniert ist, so dass der Clip-Strang 66 ohne stärkere seitliche Auslenkung von der Spule 88 abgewickelt werden kann. Bei der in den Fig. 1B und 2B gezeigten symmetrischen Doppelanordnung mit zwei gegenläufig rotierenden Spulen wird dies dadurch erreicht, dass die beiden Spulen 88, 90 um einen kleinen Winkel schräg zur Zentralachse 40 verdreht sind. Eine andere Lösung sieht vor, die beiden Spulen an vertikal und/oder horizontal gegeneinander versetzten Achsen zentrisch über der jeweils zugeordneten Magazinstange 68 zu positionieren. Nachteilig wäre hierbei aber der größere Platzbedarf.

Der Träger 10 ist in der Vorderansicht nochmals in Fig. 3 isoliert dargestellt. Er weist im wesentlichen drei große kolinear längs seiner Haupterstreckungsrichtung angeordnete Bohrungen 92, 94, 96 auf, von denen die mittlere Bohrung 96 zur Schlauch- oder Zentralachse 40 zentriert ist. Konzentrisch zu der mittleren Bohrung 96 ist an der Außenkontur des Trägers ein Ringsegment 98 ausgebildet. Auf dem Ringsegment sitzt das Führungselement 44 um die Zentralachse 40 schwenkbar gleitgelagert auf. Die gestrichelten Bogenlinien 102, 103 vervollständigen das in dieser Ansicht nicht sichtbare Ringsegment 98. Die gestrichelten geraden Linien 105, 106 stellen die in dieser Ansicht ebenfalls nicht sichtbaren, dem Führungselement 44 zugeordneten Führungsrillen für die Verdrängerbleche 34, 35, 36, 37, 38 dar. Der Hub der Schwenk- oder Pendelbewegung des Führungselements 44 ist auf einen Winkelabschnitt beschränkt, der durch die mittels vier Freimachungen 100 erzeugten Abschnitte des Ringsegments 98 sowie die Breite des Führungselements 44 bestimmt ist.

Auf der Vorderseite, d.h. auf der dem Betrachter zugewandten Seite, ist auf einem das Ringsegment 98 überdeckenden Ring 99 des Führungselements 44 der Zapfen 86 für den Antrieb des Clip-Vorschubs 70 angebracht. Dieser pendelt bei der Bewegung des Führungselements 44 um die Zentralachse 40, wobei seine Anordnung an die Lage des Anlenkpunkts des Hebelarms 84 an dem Clip-Vorschub 70 angepasst ist.

Die oberhalb und unterhalb symmetrisch zur Zentralachse 40 in dem Träger 10 befindlichen Bohrungen 92, 94 dienen der Aufnahme der Kugellager 20, 22. Innerhalb der Bohrungen 92, 94 ist eine strichpunktierte Linie 116, 118 dargestellt, die die Umlaufkreise der Kurbelzapfen 30, 32 während eines Arbeitszyklus' wiedergeben. Ferner weist der Träger 10 an seinem unteren Ende drei weitere Bohrungen auf, von denen die beiden äußeren zur Aufnahme von Schrauben 108 dienen. Mit den Schrauben 108 sind die beiden Träger 10 über einen Abstandshalter 110 symmetrisch zur Mittelebene und beabstandet voneinander verbunden (Fig. 2A). Ferner ist an dem Träger 10 ein einseitiger Ausleger 112 montiert, an dessen freiem Ende in einer weiteren Bohrung 113 eine Achse gelagert ist, an der ein Pneumatikzylinder 114 dergestalt angelenkt ist, dass dessen Kolben 154 als Stelleinrichtung an dem Messer 50 angreift, vgl. hierzu Fig. 7.

In Fig. 4 ist nochmals verdeutlicht, in welcher Weise die obere und untere Riemenscheibe 24, 26 mittels eines Zahnriemens 28 formschlüssig verbunden sind. Wird die untere Hohlwelle 14 beispielsweise mittels eines elektrischen Rotationsantriebs oder mittels einer Handkurbel in Drehung versetzt, so wird das Drehmoment synchron und ohne Schlupf auch auf die obere Hohlwelle 16 übertragen. Dabei ist die Anordnung der Kurbelzapfen 30, 32 so gewählt, dass diese sich gegenläufig aufeinander zu und voneinander weg bewegen. Die Kurbelzapfen 30, 32 sind in jeder Arbeitsstellung punktsymmetrisch bezüglich der Zentralachse 40 angeordnet. Hierdurch heben sich die an den daran gelagerten Elementen angreifenden Kräfte größtenteils gegeneinander auf, wodurch die gesamte Anordnung der Portionierungsvorrichtung im wesentlichen schwingungsfrei operiert. Die in Fig. 4 gezeigte Lage der Kurbelzapfen 30, 32 auf dem Umlaufkreis 116 bzw. 118 ist auch in den folgenden Figuren beibehalten.

In der Vorderansicht gemäß Fig. 5 ist eines der Verdrängerblechpaare 34, 36 dargestellt. Die Verdrängerbleche sind auf Grund der Winkelauslenkung der Kurbelzapfen einerseits und auf Grund der zentrischen Lagerung des hier nicht dargestellten Führungselements 44 andererseits aus der Vertikalen in Fig. 1 herausgeschwenkt. Ferner sind in Fig. 5 die Konturen der Distanzscheiben 120, 123 dargestellt, die jeweils zwischen zwei axial benachbarten Verdrängerblechen auf jeweils einem der Kurbelzapfen 30, 32 angeordnet sind, um diese parallel und in einem definierten Abstand zu halten. Die jeweils einem Kurbelzapfen zugeordneten Verdrängerbleche bilden also abwechselnd mit den Distanzscheiben jeweils einen Stapel, wobei die Verdrängerbleche und die Distanzscheiben auf jedem der Kurbelzapfen beispielsweise mittels einer Schraube derart miteinander verbunden sind, dass sie sich nicht auf dem zugeordneten Kurbelzapfen gegeneinander verdrehen können.

Die obere Distanzscheibe 120 weist ein in Richtung des V-förmigen Ausschnitts des zugeordneten Verdrängerblechs gerichtetes Langloch 124 auf, das in der weiter unten beschriebenen Weise dazu dient, den Stempel 46 zu führen. Die untere Distanzscheibe 123 weist auf seiner der Zentralachse zugewandten Seite eine Tasche 125 auf, die der Aufnahme der Matrize 48 (in Fig. 6 dargestellt) dient. Auf der dem zugeordneten Kurbelzapfen 32 entgegengesetzten Seite weist die untere Distanzscheibe 123 einen über das untere Ende des Verdrängerblechs 36 hinausragenden Fortsatz auf, der mit einem um die Mittelachse des zugeordneten Kurbelzapfens 32 kreissegmentförmig angeordneten Langloch 126 und entlang des entsprechenden Teilkreises angeordneten Senkungen 128 versehen ist. Zwischen dem unteren Kurbelzapfen 32 einerseits und dem unteren Stapel aus Verdrängerblechen und Distanzscheiben andererseits ist eine Exzenterbuchse 130 eingefügt, mit deren Hilfe der wirksame Radius der entsprechenden Kurbel verändert werden kann. Hierzu wird ein am einen Ende der Exzenterbuchse 130 angeformter Hebel 132 um den Kurbelzapfen 32 geschwenkt und dabei die Lage der Exzenterbuchse 130 so verändert, dass sich der Stapel aus Verdrängerblechen und Distanzscheiben relativ zum Kurbelzapfen 32 hauptsächlich in Richtung der Schlauchachse verlagert. Mit dieser Verstelleinrichtung kann der minimale Abstand zwischen den oberen und unteren Verdrängerblechen sowie den zugeordneten Elementen der Verschließeinrichtung (Stempel und Matrize) in der schlauchachsnahen Schließstellung je nach Bedarf verkleinert oder vergrößert werden. Die gewünschte Einstellung kann durch Arretieren des zapfenfernen Endes des Hebels 132 in einer der Senkungen 128 beispielsweise mittels einer Schraube erfolgen.

In Fig. 6 sind - wiederum in derselben Arbeitsstellung - die Elemente der Verschließeinrichtung (Stempel und Matrize) dargestellt. Die Orientierung der Matrize 48 ist durch die Tasche 125 der in dieser Figur nicht dargestellten Distanzscheibe 123 (Fig. 5) vorgegeben. Die Matrize 48 weist auf ihrer der Schlauchachse zugewandten Seite eine Prägekontur 134 auf.

Auf dem oberen Kurbelzapfen 30 ist eine Exzenterscheibe 136 dergestalt befestigt oder angeformt, dass die Exzenterscheibe beim Umlauf vom Zentrum der Kurbel aus gesehen immer radial nach außen weist. Auf der Exzenterscheibe 136 ist ein schwenkbar gelagerter Ring 138 angeordnet, der einen in dem Langloch 124 längsgeführten Quersteg 140 an seiner der Schlauchachse 40 zugewandten Seite trägt. Das hier gezeigte Ausführungsbeispiel einer Portionierungsvorrichtung ist mit seiner spiegelsymmetrischen Anordnung der Bauteile um die Mittelebene zum gleichzeitigen Setzen zweier Clips konzipiert. Bei dieser Ausführungsform ist die Exzenterscheibe 136 zentrisch, d.h. in der Mittelebene zwischen den beiden symmetrisch angeordneten Verdrängerblech-Doppelpaaren, auf dem Kurbelzapfen 30 angeordnet, vgl. Fig. 2A. Der Quersteg 140 ist als ein sich in beide Richtungen von der Mittelebene aus symmetrisch seitwärts erstreckender Stab ausgebildet, der an seinen beiden Enden jeweils einen Stempel 142 trägt.

Die obere Distanzscheibe 120 besteht aus zwei aufeinander liegenden Elementen, nämlich aus einer Basisscheibe 121 und einem Distanzring 122. Die Höhe beider Elemente ist so gewählt, dass eine in die Basisscheibe 121 eingeformte und zu dem Langloch 124 parallel und symmetrisch angeordnete Clip-Führung 146 in der Mitte des Zwischenraums zwischen den beiden an die Distanzscheibe 120 angrenzenden Verdrängerblechen 34, 35 positioniert ist.

In Fig. 7 ist die Anordnung bzw. Lagerung des Messers 50 an dem unteren Kurbelzapfen 32 in der bereits aus den Fig. 4 - 6 bekannten Arbeitsstellung isoliert gezeigt. Das Messer 50 besteht im wesentlichen aus einem stumpfwinklig abgeknickten Doppelhebel, der in seinem Knickbereich 148 an dem Kurbelzapfen 32 gelagert ist und dessen einer Arm 150 eine Schneide 151 aufweist, während sein anderer Arm 152 mittels des Pneumatikzylinders 114 ortsfest am Träger 10 (nicht dargestellt) verankert ist. Wird der an einem Gelenk 153 angelenkte Kolben 154 des Pneumatikzylinders 114 ausgefahren, so schwenkt das Messer 50 um den Kurbelzapfen 32, bis die Schneide 151 so weit aus dem schlauchachsnahen Bereich nach unten herausgeschwenkt ist, dass sie beim Durchlaufen eines Arbeitszyklus' die Zentralachse 40 nicht überstreicht. Diese Einstellung wird gewählt, wenn die Produktion einer Kette von zusammenhängenden Würsten vorgesehen ist. Soll die Wurstkette durchtrennt werden, kann beispielsweise für einen einzelnen Arbeitszyklus der Kolben 154 des Pneumatikzylinders 114 eingefahren werden, so dass das Messer 150 während dieses Arbeitszyklus' mit seiner Schneide 151 den Schlauchzopf (nicht dargestellt) mittels eines ziehenden Schnittes durchtrennt (Schneidstellung). Im nächsten Arbeitszyklus kann das Messer wahlweise wieder in die nicht schneidende Stellung gefahren werden oder in der Schneidstellung verbleiben, so dass entweder erneut eine Kette von Würsten gebildet wird oder wahlweise einzelne Würste hergestellt werden können.

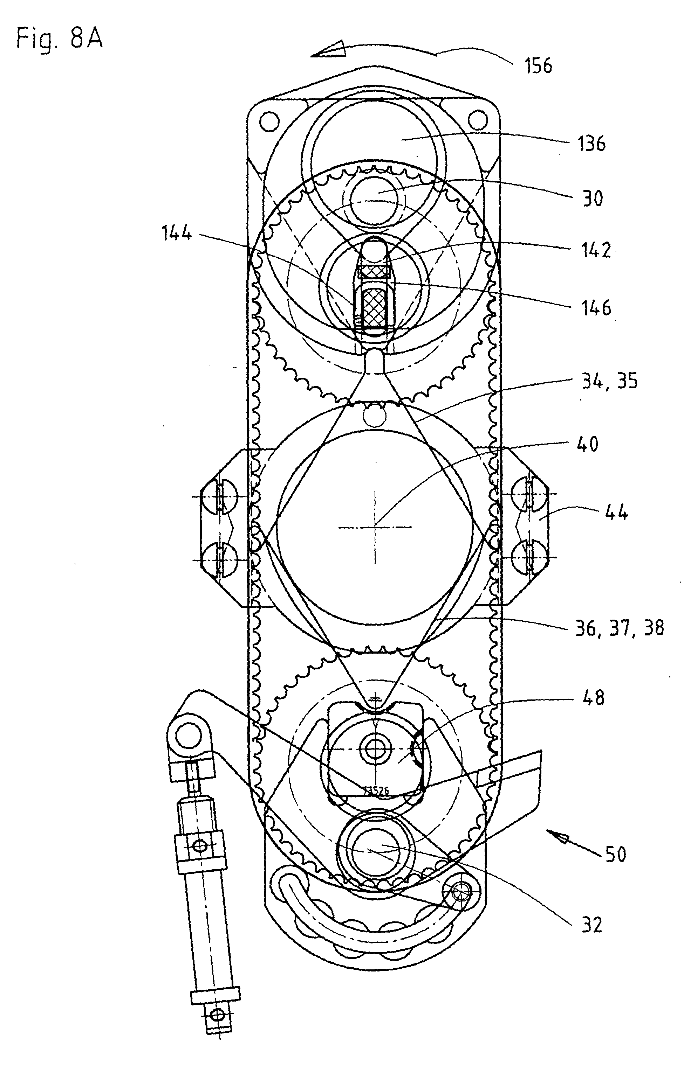

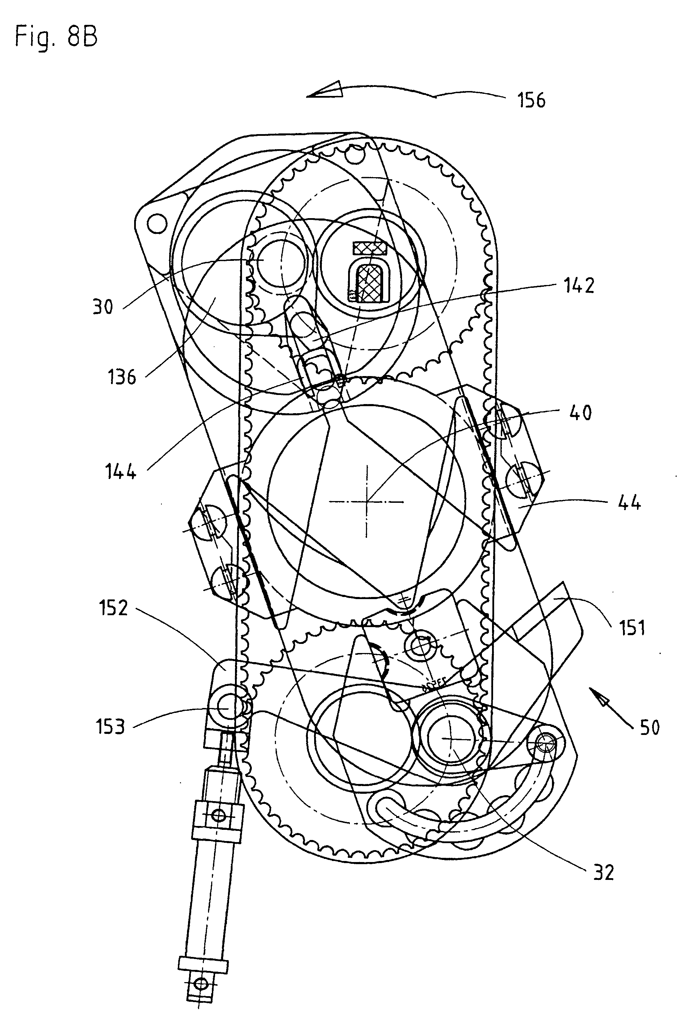

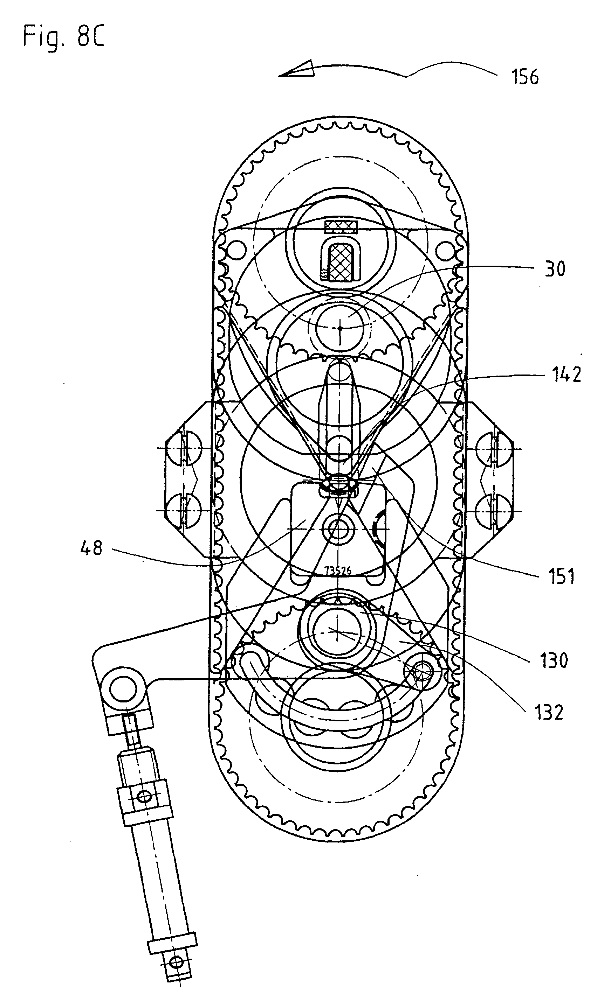

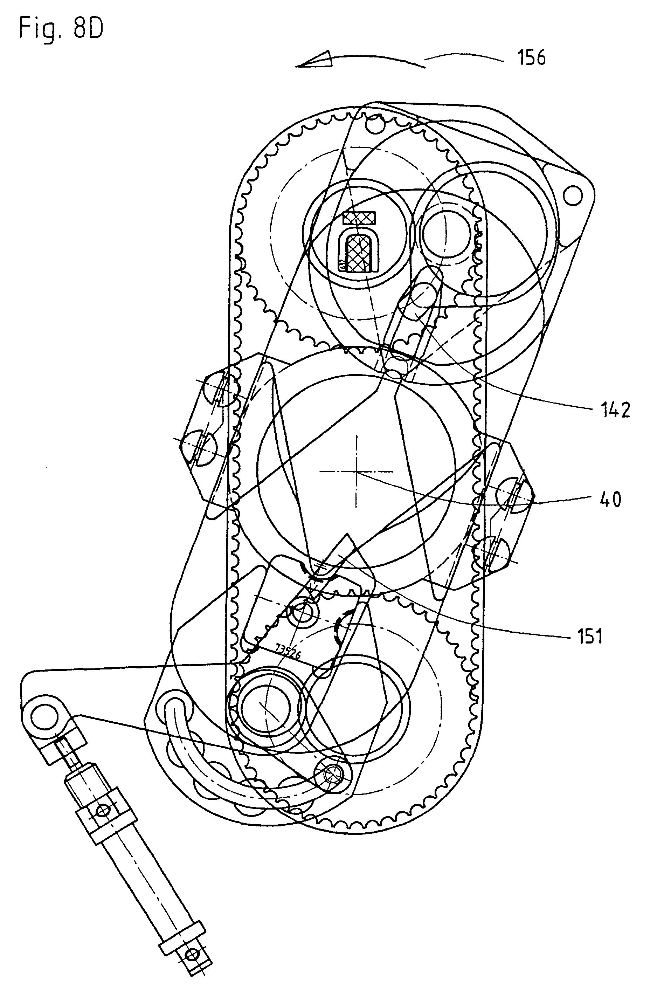

In den folgenden Fig. 8A - 8D ist eine Sequenz aus vier Arbeitsstellungen dargestellt, an Hand derer ein voller Arbeitszyklus der erfindungsgemäßen Portionierungsvorrichtung beschrieben wird. Die erste Arbeitsstellung in Fig. 8A zeigt die beiden Kurbelzapfen 30, 32 sowie alle daran gelagerten Elemente der Portionierungsvorrichtung in einer schlauchachsfernen Öffnungsstellung. In dieser Stellung weisen die dreieckförmigen Ausschnitte der Verdrängerbleche 34 - 38 die maximale, rautenförmige Öffnung auf. Ebenfalls befinden sich die Matrize 48, das Messer 50 und der Stempel 142 in der größtmöglichen Entfernung von der Schlauchachse 40. Die Stapel aus Verdrängerblechen, Verschließelementen und Distanzscheiben sind in dieser Arbeitsstellung nicht ausgeschwenkt, wodurch das Führungselement 44 sich senkrecht zur Längsachse des Trägers 10 erstreckt (in den Fig. 8 nicht gezeichnet).

Auch die in der oberen Distanzscheibe 120 eingeformte Clipführung 146 verläuft in Richtung der Träger-Längsachse. Sie befindet sich ebenfalls in einer Stellung größtmöglicher Entfernung von der Schlauchachse 40. Nur in dieser Stellung fluchtet die Austrittsöffnung des hier nicht dargestellten Clip-Einlaufkanals, genauer das offene untere Ende der Magazinstange 68, mit der Führungsbahn des Clips 146, so dass ein mittels des Clip-Vorschubs 70 nachgeführter Clipstrang 66 in der Führungsbahn des Clips mündet. Die Tiefe der Clip-Führungsbahn 146 ist dabei so bemessen, dass darin genau ein Clip bündig mit der dem Clipstrang zugewandten Außenoberfläche der Basisscheibe 121 abschließend Platz findet. Wird die obere Kurbel nun entgegen dem Uhrzeigersinn angetrieben 156, so dass der Stapel aus den oberen Verdrängerblechen 34, 35 und den zugeordneten Distanzscheiben aus der gezeigten Stellung seitlich herausschwenkt, wird der eine in die Clipführung 146 eingeführte Clip 144 von dem Strang der nachgeführten Clips 66 seitlich abgeschert, vgl. Fig. 2A und 8B. Gleichzeitig verschließt die dem Clipstrang zugewandte Außenoberfläche der Basisscheibe 121 das offene untere Ende der Magazinstange 68 und somit die Austrittsöffnung des Clip-Einlaufkanals 60.

Die Exzenterscheibe 136 bewegt sich während dessen auf einem größeren Umlaufradius als der Kurbelzapfen 30 in Richtung auf die schlauchachsnahe Schließstellung der Vorrichtung. Der Stempel 142 legt dadurch einen größeren Weg als die zugeordneten Verdrängerbleche 34, 35 und die Distanzscheibe 120 zurück. Dabei bewegt sich der Quersteg 140 in der Nut 124 relativ zu den Verdrängerblechen (abwärts) zur Schlauchachse hin. Bei der Abwärtsbewegung schiebt der Stempel 142 den abgetrennten Clip 144 in der Führungsbahn 146 relativ zu den oberen Verdrängerblechen nach unten in Richtung der Schlauchachse 40.

Die oberen Stapel aus den Verdrängerblechen 34, 35 und den zugeordneten Distanzscheiben 120 folgen an ihrem oberen Ende der kreisförmigen Bahn des Kurbelzapfens 30. An ihrem unteren, schlauchachsnahen Ende führen sie auf Grund der Schwenklagerung des linearen Führungselements 44 eine Drehbewegung um die Schlauchachse aus und bewegen sich zugleich in radialer Richtung auf die Schlauchachse 40 zu. In gleicher Weise werden die unteren Stapel bestehend aus den unteren Verdrängerblechen 36 - 38 und den zugeordneten Distanzscheiben 122 mittels des Kurbelzapfens 32 an ihrem unteren Ende auf einer Kreisbahn nach rechts ausgelenkt und bewegen sich zugleich in radialer Richtung gegenläufig ebenfalls auf die Schlauchachse 40 zu. Die gesamte Anordnung bildet gewissermaßen ein Doppelpendel, das in dieser Phase des Arbeitszyklus' (Fig. 8B) gegen den Uhrzeigersinn ausschlägt.

Das Messer 50 führt dabei eine zusätzliche Schwenkbewegung um den unteren Kurbelzapfen 32 aus, da der Anlenkpunkt 153 an dem der Schneide 151 gegenüberliegenden Arm 152 auf einer Kreisbahn mit konstantem Radius bezüglich des ortsfesten, hier nicht dargestellten Trägers 10 geführt ist. Der Kolben 154 des Pneumatikzylinders 114 ist eingefahren, wodurch das Messer 50 die Schneidstellung einnimmt.

In der dritten Arbeitsstellung, Fig. 8C, haben beide Kurbelzapfen einen Winkel von 180° überstrichen, so dass sich nun die gesamte Anordnung in der schlauchachsnahen Schließstellung befindet. Die Stapel befinden sich in dieser Arbeitsstellung wieder in einer nicht seitlich ausgeschwenkten Position. Die zusammenwirkenden Verdrängerblechpaare überlappen in dieser Stellung so weit, dass im Bereich der Schlauchachse nur noch eine minimale Öffnung verbleibt. Die Öffnung kann in der zuvor geschilderten Weise mittels des Hebels 132 und der angeformten Exzenterbuchse 130 auf das notwendige Maß eingestellt werden.

Die untere Distanzscheibe 123 und die darin aufgenommene Matrize 48 sind ebenfalls bis auf einen minimalen Abstand an die Schlauchachse herangefahren. Der auf dem oberen Kurbelzapfen 30 gelagerte Stempel 46 befindet sich nun ebenfalls in der schlauchachsnahen Stellung und hat sich dabei der Matrize 48 so weit genähert, dass die Schenkel des Clips 144 in der Prägekontur 134 der Matrize 48 nach innen umgebogen worden sind. Der Clip 144 bildet nunmehr einen festen Verschluss um die zopfartig zusammengeraffte Schlauchhülle.

Das in den Zeichnungen gezeigte Ausführungsbeispiel einer Doppelclipmaschine weist, wie eingangs erwähnt, eine zur - die Drehachsen 12, 14 senkrecht durchsetzenden - Mittelebene im Wesentlichen spiegelsymmetrisch verdoppelte Anordnung der auf den Kurbelzapfen gelagerten Bauteile auf. Jenes zweite Verdrängerblech-Doppelpaar und die zweiten Verschließeinrichtungen bewirken, dass - wie zum Teil schon beschrieben - ein zweiter Clip axial beabstandet zu dem gezeigten ersten Clip gleichzeitig auf dem Schlauchzopf aufgebracht wird.

Das in der Mittelebene angeordnete Messer 50 ist in dieser Arbeitsstellung mit seiner Schneide 151 in die Nähe der Schlauchachse 40 gerückt. Auf Grund der Geometrie der beiden Arme 150, 152 sowie der Anlenkpunkte hat die Schneide 151 die Schlauchachse 40 zu diesem Zeitpunkt noch nicht überstrichen, so dass beim Setzen der beiden Clips, der Schlauchzopf noch nicht durchtrennt wird. Dies geschieht erst einen kurzen Moment nach dem Setzen der Clips, so dass sichergestellt ist, dass kein Füllgut während des Schneidvorgangs aus der Schlauchhülle 42 austreten kann.

In der vierten Arbeitsstellung, Fig. 8D, schlägt das Doppelpendel nach der anderen Seite aus. Die auf den Kurbelzapfen gelagerten Elemente pendeln also an ihrem schlauchachsfernen Ende auf einer Kreisbewegung nun in die andere Richtung, während sich die aus den zusammenwirkenden Verdrängerblechpaaren 34 - 38 gebildete Einschnüreinrichtung in radialer Richtung auswärts bewegt, also öffnet. Zugleich bewegt sich der Stempel 46 relativ zu den oberen Verdrängerblechen 34, 35 in seiner Längsführung 124 nach oben. Das Messer 50 ist in dieser Stellung bereits in einer ziehenden Schneidbewegung mit seiner Schneide 151 über die Schlauchachse 40 hinweggestrichen und schwenkt nunmehr wieder aus der dreieckförmigen Öffnung der unteren Verdrängerbleche 36 - 38 heraus.

Weitere Vorzüge der erfindungsgemäßen Portionierungsvorrichtung sind durch ihre kompakte Bauweise und ihren vibrationsarmen Lauf bedingt. So ist es beispielsweise denkbar, die Portionierungsvorrichtung unmittelbar (quasi modular) an eine vorgeschaltete Füllmaschine anzuflanschen. Dabei können auch das Antriebsmodul und die Steuerung des Füllers verwendet werden, um die Rotationsbewegung der Portionierungsvorrichtung zu erzeugen. So kann beispielsweise ein kontinuierlicher Rotationsantrieb von dem Servoantrieb des Füllers abgegriffen werden. Ferner kann je nach gewünschter Füllmenge, abhängig von der Öffnungsstellung der Verdrängerbleche die Drehzahl des Antriebs variiert werden. Beispielsweise ist es möglich, die Steuerung des Füllers und/oder des Antriebs der Portionierungsvorrichtung bei einer großen Füllmenge so zu programmieren, dass die Drehzahl im Bereich der Öffnungsstellung geringer als im übrigen Arbeitszyklus ist. Weiterhin vorteilhaft ist die durch die geringen Massen und den harmonischen Bewegungsablauf bedingte geringe Antriebsleistung.

## Patentansprüche

1. Vorrichtung zum Abteilen von Portionspackungen eines unterteilbaren Füllgutes in einer flexiblen Schlauchhülle (56) durch Einschnüren des gefüllten Schlauches (42) und Aufbringen mindestens eines Verschlusselements (54; 144) auf den durch axiales Verdrängen des Füllgutes gebildeten Schlauchzopf,
mit zwei Paaren überlappend und symmetrisch zur Schlauchachse gegenläufig bewegbaren Verdrängerblechen (34,35,36,37,38), die einander zugewandte, im wesentlichen dreiecksförmige Ausschnitte haben,
und einer aus zwei zusammenwirkenden, zwischen den Verdrängerblechpaaren gegenläufig bewegbaren Elementen bestehenden Verschließeinrichtung,
wobei die einen Verdrängerbleche (34, 35) jedes Paares sowie das eine Element der Verschließeinrichtung von einer ersten Kurbel und die anderen Verdrängerbleche (36, 37, 38) jedes Paares sowie das andere Element der Verschließeinrichtung von einer zweiten Kurbel bewegt werden,
wobei die Radien der Kurbeln gleich sind und ihre Drehachsen (12, 14) gleichen Abstand von der Schlauchachse (40) haben, mit der sie parallel in einer gemeinsamen Ebene liegen,
und wobei die Kurbeln um ihre Drehachsen (12, 14) synchron aus schlauchachsfernen Öffnungsstellungen in schlauchachsnahe Schließstellungen der Verdrängerbleche und der Elemente der Verschließeinrichtung und weiter wieder in die schlauchachsfernen Öffnungsstellungen drehbar sind,
**dadurch gekennzeichnet, dass** die Verdrängerbleche (34, 35; 36, 37, 38) und die Elemente (46, 142; 48) der Verschließeinrichtung jeweils mittels Drehgelenken 30; 32, wie Zapfen, an den gleichsinnig angetriebenen Kurbeln angelenkt sowie mittels eines gemeinsamen Führungselements (44) geführt sind, das um die Schlauchachse (40) auf einem auch die Kurbeln lagernden Träger (10) schwenkbar gelagert ist.

2. Vorrichtung nach Anspruch 1,
**dadurch gekennzeichnet, dass** die Elemente der Verschließeinrichtung ein Stempel (46, 142) und eine Matrize (48) zum Verschließen eines Clips (144) als Verschlusselement sind, und dass ein Clip-Einlaufkanal (60) mit Abstand vom Kurbelzapfen (30) derart an einer Führungsbahn (146) des Clips mündet, dass seine Austrittsöffnung nur in der Öffnungsstellung mit der Führungsbahn (146) fluchtet und ein Clip (144) in diese eintreten kann.

3. Vorrichtung nach Anspruch 2,
**dadurch gekennzeichnet, dass** der Stempel (46,142) der Verschließeinrichtung exzentrisch auf seinem Kurbelzapfen (30) schwenkbar gelagert ist, derart, dass er bei der Kurbeldrehung von der schlauchachsfernen Öffnungsstellung in die schlauchachsnahe Schließstellung einen etwas größeren Weg als die Verdrängerbleche (34, 35) zurücklegt.

4. Vorrichtung nach Anspruch 3,
**dadurch gekennzeichnet, dass** eine auf dem Kurbelzapfen (30) befestigte Exzenterscheibe (136) den in einer Längsführung (124) geführten Stempel (142) lagert.

5. Vorrichtung nach Anspruch 1,
**dadurch gekennzeichnet, dass** der Abstand der einen Verdrängerbleche (36, 37, 38) und/oder des einen Elements der Verschließeinrichtung von der Schlauchachse (40) verstellbar ist.

6. Vorrichtung nach Anspruch 5,
**dadurch gekennzeichnet, dass** eine zwischen die Verdrängerbleche (36, 37, 38) und/oder das Element der Verschließeinrichtung einerseits und den zugeordneten Kurbelzapfen (32) andererseits eingefügte Exzenterbuchse (130) den wirksamen Radius der betreffenden Kurbel verändert.

7. Vorrichtung nach Anspruch 6,
**dadurch gekennzeichnet, dass** die Exzenterbuchse (130) am einen Ende eines um den Kurbelzapfen (32) schwenkbaren Hebels (132) befestigt ist, dessen anderes Ende innerhalb eines vorbestimmten Winkelbereichs gegenüber den Verdrängerblechen (36, 37, 38) und/oder dem Element der Verschließeinrichtung festlegbar ist.

8. Vorrichtung nach einem der Ansprüche 2 bis 7,
**dadurch gekennzeichnet, dass** der Clip-Einlaufkanal (60) durch die als Hohlwelle (16) ausgebildete Drehachse (12) der den Stempel (46, 142) bewegenden Kurbel an die Führungsbahn (146) des Clips ragt.

9. Vorrichtung nach Anspruch 8,
**dadurch gekennzeichnet, dass** der Clip-Einlaufkanal (60) seitlich abschwenkbar ist.

10. Vorrichtung nach einem der vorhergehenden Ansprüche,
**dadurch gekennzeichnet, dass** zwei Doppelpaare von Verdrängerblechen (34,35,36,37,38) und zwei Verschließeinrichtungen nebeneinander und symmetrisch zu der die Drehachsen (12, 14) der Kurbeln durchsetzenden Mittelebene angeordnet sind, mit denen gleichlaufend zwei Verschlusselemente (54, 144) mit Abstand voneinander auf den Schlauchzopf gesetzt werden können.

11. Vorrichtung nach den Ansprüchen 4 und 10,
**dadurch gekennzeichnet, dass** die Exzenterscheibe (136) beiden Stempeln (142) zugeordnet ist, indem ein auf ihr schwenkbar gelagerter Ring (138) einen in beiden Stempelführungen geführten Quersteg (140) trägt, an dessen beiden Enden je ein Stempel (142) angeformt ist.

12. Vorrichtung nach Anspruch 11,
**dadurch gekennzeichnet, dass** ein in der Mittelebene geführtes Messer (50) wahlweise in den Arbeitszyklus einschaltbar ist, derart, dass es unmittelbar nach Abschluss des Verschließvorganges den Schlauchzopf zwischen den beiden Verschlusselementen (54, 144) durchtrennt.

13. Vorrichtung nach Anspruch 12,
**dadurch gekennzeichnet, dass** die Schneide (151) des Messers (50) am freien Ende eines flachen Hebels ausgebildet ist, der an seinem anderen Ende auf dem Zapfen (32) der einen Kurbel schwenkbar gelagert ist.

14. Vorrichtung nach Anspruch 13,
**dadurch gekennzeichnet, dass** der Hebel ein stumpfwinklig abgeknickter Doppelhebel ist, der in seinem Knickbereich (148) auf dem einen Kurbelzapfen (32) gelagert und dessen einer Arm (150) als Schneide (151) ausgebildet ist, während sein anderer Arm (152) über eine längenveränderliche Stelleinrichtung (114, 154) ortsfest am Träger (10) verankert ist.

15. Vorrichtung nach einem der vorhergehenden Ansprüche,
**dadurch gekennzeichnet, dass** ein kontinuierlicher Rotationsantrieb auf eine den einen Kurbelzapfen (30, 32) tragende, um die Drehachse (12, 14) drehbar gelagerte Riemenscheibe (24, 26) mittels Zahnriemen (28) auch auf eine den anderen Kurbelzapfen tragende, um die andere Drehachse drehbar gelagerte Riemenscheibe wirkt.

16. Vorrichtung nach Anspruch 15,
**dadurch gekennzeichnet, dass** die Drehzahl des Antriebs veränderbar und im Bereich der Öffnungsstellung geringer als im übrigen Arbeitszyklus ist.

## Claims

1. Device for division of portioned packages of a divisible filling material in a flexible tubular sheath (56) by necking the filled tube (42) and applying at least one closing element (54; 144) to the tube length formed by axial displacement of the filling material,
having two pairs of displacement plates (34, 35, 36, 37, 38) which can move in opposition in an overlapping and symmetrical manner with respect to the axis of the tube and which have mutually facing substantially triangular notches,
and having a closing device consisting of two co-operating elements which can move in opposition between the displacement plate pairs,
wherein one displacement plate (34, 35) of each pair and one element of the closing device are moved by a first crank and the other displacement plate (36, 37, 38) of each pair and the other element of the closing device are moved by a second crank,
wherein the radii of the cranks are equal and their rotational axes (12, 14) are at equal distances from the tube axis (4) with which they are in parallel in a common plane,
and wherein the cranks can rotate about their rotational axes (12, 14) in a synchronous manner from opening positions, remote from the tube axis, to closing positions, close to the tube axis, of the displacement plates and the of elements of the closing device and can rotate back into the opening positions remote from the tube axis,
**characterised in that** the displacement plates (34, 35, 36, 37, 38) and the elements (46, 142; 48) of the closing device are in each case articulated by means of hinges (30; 32) and journals on the cranks, which are driven in the same direction, and are guided by means of a common guide element (44) which is mounted so to be pivotable about the tube axis (40) on a support (10) which also serves as a bearing for the cranks.

2. Device as claimed in claim 1, **characterised in that** the elements of the closing device are a stamp (46, 142) and a die (48) for closing a clip (144) as a closing element, and that a clip run-in channel (60) spaced apart from the crank journal (30) issues at a guide track (146) for the clip in such a way that only in the opening position is its exit orifice aligned with the guide track (146) and a clip (144) able to enter this guide track.

3. Device as claimed in claim 2, **characterised in that** the stamp (46, 142) of the closing device is pivotably mounted in an eccentric manner on its crank journal (30) in such a way that during rotation of the crank from the opening position remote from the tube axis into the closing position close to the tube axis it travels a somewhat greater distance than the displacement plates (34, 35).

4. Device as claimed in claim 3, **characterised in that** an eccentric disc (136) attached to the crank journal (30) serves as a bearing for the stamp (142) which is guided in a longitudinal guide (124).

5. Device as claimed in claim 1, **characterised in that** the distance from one displacement plate (36, 37, 38) and/or one element of the closing device to the tube axis (40) is adjustable.

6. Device as claimed in claim 5, **characterised in that** an eccentric bushing (130), which is inserted between the displacement plates (36, 37, 38) and/or the element of the closing device on the one hand and the associated crank journal (32) on the other hand, changes the effective radius of the crank concerned.

7. Device as claimed in claim 6, **characterised in that** the eccentric bushing (130) is attached to one end of a lever (132) which can pivot about the crank journal (32), the other end of which can be fixed, within a predetermined angular range, with respect to the displacement plates (36, 37, 38) and/or the element of the closing device.

8. Device as claimed in any one of claims 2 to 7, **characterised in that** the clip run-in channel (60) protrudes onto the guide track (146) of the clip through the rotational axis (12), formed as a hollow shaft (16), of the crank which moves the stamp (46, 142).

9. Device as claimed in claim 8, **characterised in that** the clip run-in channel (60) can be pivoted away laterally.

10. Device as claimed in any one of the preceding claims, **characterised in that** two double pairs of displacement plates (34, 35, 36, 37, 38) and two closing devices are disposed next to each other and symmetrically with respect to the middle plane passing through the rotational axes (12, 14) of the cranks, with which two mutually spaced closing elements (54, 144) can be placed on the tube length synchronously.

11. Device as claimed in claims 4 and 10, **characterised in that** the eccentric disc (136) is allocated to both stamps (142), wherein a ring (138) pivotably mounted on the eccentric disc supports a transverse web (140) guided in both stamp guides, on the two ends of which a respective stamp (142) is integrally formed.

12. Device as claimed in claim 11, **characterised in that** a cutter (50) guided in the middle plane can be selectively switched into the working cycle in such a way that it severs the tube length between the two closing elements (54, 144) immediately after the closing process is completed.

13. Device as claimed in claim 12, **characterised in that** the blade (151) of the cutter (50) is formed at the free end of a flat lever which is pivotably mounted at its other end on the journal (32) of one crank.

14. Device as claimed in claim 13, **characterised in that** the lever is a double lever bent at an obtuse angle, which in its bent region (148) is mounted on one crank journal (32) and of which one arm (150) is formed as a blade (151), while its other arm (152) is anchored in a stationary manner on the support (10) via a longitudinally adjustable adjusting device (114, 154).

15. Device as claimed in any one of the preceding claims, **characterised in that** a continuous rotary drive acts upon a pulley (24, 26), which is mounted to be rotatable about the rotational axis (12, 14) and which supports one crank journal (30, 32), by means of toothed belts (28), and also acts upon a pulley which is mounted to be rotatable about the other rotational axis and which supports the other crank journal.

16. Device as claimed in claim 15, **characterised in that** the rotational speed of the drive can be altered and is lower close to the opening position than in the rest of the working cycle.

## Revendications

1. Dispositif pour diviser des emballages en portions d'un produit divisible placé dans une enveloppe (56) de boyau souple en resserrant le boyau, (42) rempli et en appliquant au moins un élément de fermeture (54 ; 144) sur la tresse de boyau formée en embossant axialement le produit,
comportant deux paires de tôles d'embossage (34, 35, 36, 37, 38), mobiles en sens contraire en se chevauchant et symétriquement à l'axe du boyau, qui ont des découpes orientées l'une vers l'autre et sensiblement triangulaires,
et une installation de fermeture formée de deux éléments coopérants et mobiles en sens contraire entre les paires de tôles d'embossage,
dans lequel les unes des tôles d'embossage (34, 35) de chaque paire ainsi que l'un des éléments de l'installation de fermeture sont déplacés à l'aide d'une première manivelle et les autres tôles d'embossage (36, 37, 38) de chaque paire ainsi que l'autre élément de l'installation de fermeture à l'aide d'une deuxième manivelle,
dans lequel les rayons des manivelles sont égaux et leurs axes de rotation (12, 14) sont à la même distance de l'axe du boyau (40) avec lequel ils sont disposés parallèlement dans un plan commun,
et dans lequel les manivelles peuvent tourner en synchronisme autour de leurs axes de rotation (12, 14) depuis des positions d'ouverture éloignées de l'axe du boyau jusque dans des positions de fermeture - proches de l'axe du boyau - des tôles d'embossage et des éléments de l'installation de fermeture et ensuite de nouveau jusque dans les positions d'ouverture éloignées de l'axe du boyau,
**caractérisé en ce que** les tôles d'embossage (34, 35, 36, 37, 38) et les éléments (46, 142 ; 48) de l'installation de fermeture sont respectivement articulés à l'aide d'articulations tournantes (30 ; 32) comme des manetons sur les manivelles entraînées dans le même sens et sont guidés à l'aide d'un élément de guidage (44) commun monté de façon à pivoter autour de l'axe du boyau (40) sur un support (10) qui maintient aussi les manivelles.

2. Dispositif selon la revendication 1,
**caractérisé en ce que** les éléments de l'installation de fermeture consistent en un poinçon (46, 142) et en une matrice (48) destinés à fermer une agrafe (144) qui sert d'élément de fermeture et un canal d'arrivée d'agrafes (60) débouche à distance du maneton de manivelle (30) sur une voie de guidage (146) de l'agrafe, de telle sorte que seulement en position d'ouverture son orifice de sortie est aligné avec la voie de guidage (146) et une agrafe (144) peut y pénétrer.

3. Dispositif selon la revendication 2,
**caractérisé en ce que** le poinçon (46, 142) de l'installation de fermeture est monté de façon à pouvoir pivoter et de façon excentrée sur son maneton de manivelle (30) de telle manière que, lorsque la manivelle tourne, il parcourt un trajet légèrement plus long que les tôles d'embossage (34, 35) depuis la position d'ouverture éloignée de l'axe du boyau jusque dans la position de fermeture proche dé l'axe du boyau.

4. Dispositif selon la revendication 3,
**caractérisé en ce qu'**un disque d'excentrique (136) fixé sur le maneton dé manivelle (30) maintient le poinçon (142) qui est guidé dans un guidage longitudinal (124).

5. Dispositif selon la revendication 1,
**caractérisé en ce que** la distance des une des tôles d'embossage (36, 37, 38) et/ou de l'un des éléments de l'installation de fermeture à l'axe du boyau (40) est réglable.

6. Dispositif selon la revendication 5,
**caractérisé en ce qu'**un coussinet d'excentrique (130), inséré entre les tôles d'embossage (36, 37, 38) et/ou l'élément de l'installation de fermeture d'une part et les manetons de manivelle, (32) associés d'autre part, modifie le rayon actif de la manivelle concernée.

7. Dispositif selon la revendication 6,
**caractérisé en ce que** le coussinet d'excentrique (130) est fixé à l'une des extrémités d'un levier (132), pivotant autour du maneton de manivelle (32), dont l'autre extrémité peut être fixée à l'intérieur d'une zone angulaire prédéfinie par rapport aux tôles d'embossage (36, 37, 38) et/ou à l'élément de l'installation de fermeture.

8. Dispositif selon l'une des revendications 2 à 7,
**caractérisé en ce que** le canal d'arrivée d'agrafes (60) pénètre sur la voie de guidage (146) de l'agrafe dans l'axe de rotation (12), conçu sous forme d'arbre creux (16), de la manivelle qui déplace le poinçon (46, 142).

9. Dispositif selon la revendication 8,
**caractérisé en ce que** le canal d'arrivée d'agrafes (60) peut être mis sur le côté par basculement.

10. Dispositif selon l'une des revendications précédentes,
**caractérisé en ce que** deux doubles paires de tôles d'embossage (34, 35, 36, 37, 38) et deux installations de fermeture sont disposées les unes à côté des autres et symétriquement par rapport au plan médian qui passe par les axes de rotation (12, 14) des manivelles ; grâce à elles deux éléments de fermeture (54, 144) à distance l'un de l'autre peuvent être posés en synchronisme sur la tresse de boyau.

11. Dispositif selon les revendications 4 et 10,
**caractérisé en ce que** le disque d'excentrique (136) est associé aux deux poinçons (142) du fait qu'une bague (148), montée sur le disque d'excentrique de façon à pouvoir pivoter, porte une entretoise (140) transversale qui est passée dans les deux guidages de poinçons et aux deux extrémités de laquelle est respectivement façonné un poinçon (142).

12. Dispositif selon la revendication 11,
**caractérisé en ce qu'**un couteau (50) guidé dans le plan médian peut intervenir éventuellement dans le cycle de travail de telle sorte qu'il sectionne la tresse de boyau entre les deux éléments de fermeture (54, 144) immédiatement après la fin de l'opération de fermeture.

13. Dispositif selon la revendication 12,
**caractérisé en ce que** la lame (151 du couteau (50) est formée à l'extrémité libre d'un levier plat qui est monté de façon à pouvoir pivoter à son autre extrémité sur le maneton (32) de l'une des manivelles.

14. Dispositif selon la revendication 13,
**caractérisé en ce que** le levier est un double levier, replié en angle obtus, qui dans la zone de son pli (148) est monté sur l'un des manetons de manivelle (32) et dont un bras (150) est façonné en lame (151) tandis que son autre bras (152) est retenu à demeure sur le support (10) par l'intermédiaire d'une installation de réglage (114,154) dont on peut modifier la longueur.

15. Dispositif selon l'une des revendications précédentes,
**caractérisé en ce qu'**un entraînement rotatif continu agit sur une poulie à courroie (24, 26), qui porte l'un des manetons de manivelle (30, 32) et qui est montée de façon à pouvoir tourner autour de l'axe de rotation (12, 14), agit aussi à l'aide de courroies dentées (28) sur une autre poulie à courroie qui porte l'autre maneton de manivelle et qui est monté de façon à pouvoir tourner autour de l'autre axe de rotation.

16. Dispositif selon la revendication 15,
**caractérisé en ce que** la vitesse de rotation de l'entraînement est modifiable et est plus petite lorsqu'on se trouve près de la position d'ouverture que dans le reste du cycle de travail.
